# EUROPEAN PATENT APPLICATION

(11) **EP 3 923 439 A1**
(43) Date of publication of application: **15.12.2021**
(21) Application number: 21179055.5
(22) Date of filing: 11.06.2021
(51) Int. Cl.: H02J 3/38, H02J 3/14

(54) **POWER CONTROL DEVICE**

(30) Priority: 11.06.2020 NL 2025816
(71) Applicant: Bredenoord Holding B.V., 7325 WT Apeldoorn (NL)
(72) Inventor: ELFRINK, Gert-Jan, 7325 WT Apeldoorn (NL)
(74) Representative: V.O.

(57) **Abstract**

A power control device (110) for controlling supply of electrical power to an excess power sink (106). The device comprises a first terminal connected to a first power source (140), an engine generator, a second terminal connected to a load circuit (152) comprising a second power source (162), solar panels, a conductor provided between the first terminal and the second terminal and a sensor module (120) determining an electrical power flow through the conductive line. The device further comprises a third terminal connected to the excess power sink (106) and a power control module (110) between the conductor line and the third terminal and arranged to control a second electrical power flow to the third terminal in response to the determined first electrical power flow. This reduces or prevents flow of power to the engine generator and prevents providing too much power to the sink.

## Description

### TECHNICAL FIELD

The various aspects and examples thereof relate to the field of removal of excess energy from local power grids.

### BACKGROUND

An amount of energy provided by a solar panel or set of solar panels is usually difficult to predict and to control, as weather conditions are difficult to predict and impossible to control. Power control of loads powered by the generated solar power may be difficult to control as well and control of that power consumption in dependence of the generated solar power is usually not desirable.

In case of insufficient power provided by solar panels, additional power may be retrieved from a public power grid. In case loads are powered via a local power grid, an engine generator may be used. In case solar panels provide excess power, the excess power may be delivered back to the public power grid. In case a local power grid is not connected to the public power grid, load banks are usually connected to the local power grid to dissipate excess load. These load banks are connected as a passive resistive bulk component manually to the local power grid; they are connected in case sunny weather is predicted and disconnected in case less sun is expected. The load banks are connected or disconnected at most one or two times per day and usually less.

### SUMMARY

It is preferred to provide a device arranged to more accurately remove excess power from a local grid. More accurately may mean in time, in magnitude, other, or a combination thereof.

A first aspect provides a power control device for controlling supply of electrical power to an excess power sink. The device comprises a first terminal arranged to be connected to a first power source, a second terminal arranged to be connected to a load circuit comprising a second power source, a conductive line provided between the first terminal and the second terminal and a sensor module arranged to determine a first electrical power flow through the conductive line. The device further comprises a third terminal arranged to be connected to the excess power sink and a power control module connected between the conductive line and the third terminal and arranged to control a second electrical power flow, preferably from the conductive line and preferably from the second terminal in particular to the third terminal in response to the determined first electrical power flow.

In case the second power source, for example a solar panel - also known as a photovoltaic power source -, a hydropower unit or a wind turbine, provides excess power, the first power source, an engine generator, a battery or a fuel cell, may be forced into a sink mode and forced to consume power. The latter may result in damage of the first power source. By monitoring a magnitude and direction of power flowing from the local circuit, the excess power to be sunk may be determined. Based on this determination, the power control module may be controlled to direct that determined excess power to the third terminal to be absorbed by the excess power sink. Such excess power sink may comprise a (resistive) load bank, a battery, an electrolysis cell, other, or a combination thereof.

In an example, the second electrical power flow is substantially equal to the first electrical power if the first electrical power flow is oriented from the second terminal to the first terminal. "Substantially" is in this context to be understood as there being a difference of less than 5% between the two entities or in any case a difference that is not significant considering architecture of the device and/or the local power grid. Hence, any power flow received at the second terminal is by the power control module diverted to the third terminal and no power is delivered to the second terminal. Preferably, the second electrical power flow and the first electrical power flow are real power flows, as opposed to reactive power flows. In such scenario, preferably a resistive load is employed as an excess power sink or excess energy sink.

In another example, the conductive line comprises at least one conductor and the sensor module comprises at least one of a voltage sensor arranged to sense a voltage between the conductor and a reference and a current sensor arranged to sense a current through the conductor. By means of the determined current and voltage values, power and a direction thereof may be determined.

In a further example, the sensor module is arranged to determine at least one of a conductor voltage phase and a conductor voltage frequency of the sensed voltage and a conductor current phase and a conductor current frequency. With this information, a particular real and a particular reactive power may be led to the third terminal and the excess power sink. Alternatively, only the real power is provided to the third terminal. Furthermore, the determining may be used for matching phase and frequency of the local power grid to a public power grid.

In yet another example, the power control module comprises an electronic switching unit. Electronic switching units, typically comprising semiconductor power switches like MOSFETs, IGBTs and the like, are able to switch electronic power with a relatively low loss of power and provide building blocks for electronic power switching units.

In yet a further example, the electronic switching unit comprises a chopper and in particular a variable speed electromotor driver. Such components are available off the shelf, though for completely different applications in different technical fields not related to this field. As such, they provide convenient to use building blocks for the device.

Again another example further comprises a filter module between the power control module and the third terminal, the filter module having an filter input impedance mimicking an input impedance of an electromotor. This example makes implementation of the previous example convenient to implement, without a significant amount of (additional) design effort. The filter module preferably comprises a dv/dt filter.

In again a further implementation, a conductor switch is provided arranged to interrupt or close the conducting line and the conductor switch is arranged to be controlled by the power control module. This embodiment allows the first power source to be disconnected from the local grid.

In a particular example, - wherein the sensor module is arranged to determine at least one of a conductor voltage phase and a conductor voltage frequency of the sensed voltage and a conductor current phase and a conductor current frequency - the power control module is arranged to receive data from a public power grid on grid phase and grid frequency of at least one of a grid current, a grid voltage and a grid power of the power grid, the power control module is arranged to control the conductor switch based on the information on the grid frequency and grid phase on one hand and at least one of the conductor voltage phase, the conductor voltage frequency the conductor current phase, the conductor current frequency, a frequency of a power flow through the conductor and a phase of the power flow through the conductor on the other hand. This example facilitates dynamically connecting and disconnecting the local power grid from a public power grid.

A second aspect provides a system for providing electrical power to at least one utility load. The system comprises the power control device according to the first aspect or examples thereof, a local power grid connected to the second terminal of the power control device and comprising at least one utility power outlet arranged to connect the utility load, further comprising a power inlet arranged to be connected to the second power source and a switch arranged to establish or interrupt an electrical connection between the local power grid and a public power grid.

An example of the first aspect comprises at least one of an engine generator, a fuel cell electrical power source and a supply battery as the first power source, at least one of a solar panel, a wind turbine generator and a hydropower turbine generator as the second power source and at least one of a sink battery, an electrolysis cell and a resistive load as the excess power sink.

A third aspect provides In a device according to the first aspect, a method of controlling power directed to an excess power sink. The method comprises determining a magnitude of a power flow between the load circuit and the first power source, determining a direction of the power flow and, if the power flow is from the load circuit, controlling the power control module to direct a sink power amount to the third terminal, the magnitude of the sink power being substantially equal to the magnitude of the power flow from the load circuit.

### BRIEF DESCRIPTION OF THE DRAWINGS

The various aspects and examples thereof will be discussed in conjunction with Figures. In the Figures:
Figure 1: shows a schematic representation of an example of the second aspect; and
Figure 2: shows a flowchart depicting a representation of an example of the third aspect.

### DETAILED DESCRIPTION

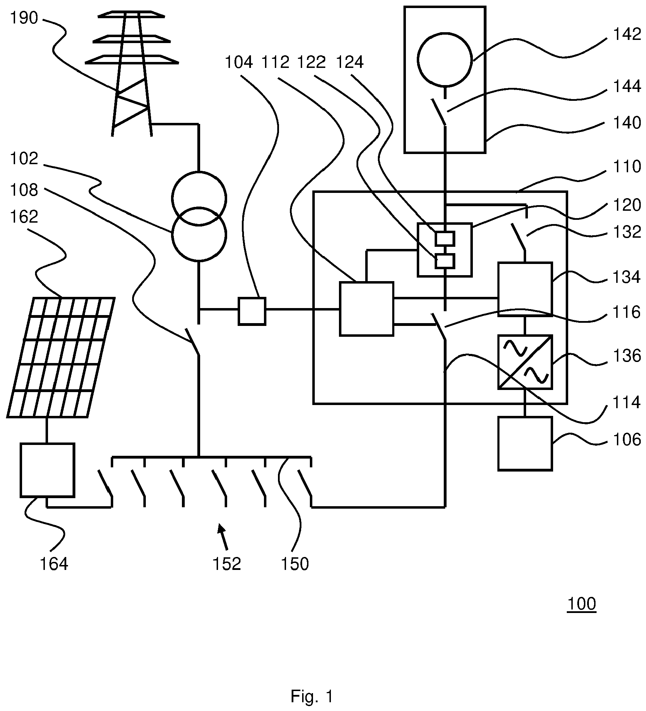

Figure 1 shows a local power grid 100 as a load circuit arranged to operate in stand-alone module or connected to a public power grid 190. The local power grid 100 is connected to the public power grid 190 by means of a transformer 102, which may be part of the public power grid infrastructure. A public power grid switch 108 is provided to connect the local power grid 100 to the public power grid 190 and to disconnected the local power grid 100 from the public power grid 190.

The local power grid 100 comprises a local power bus 150 to which various power loads and/or power supplies may be connected by means of a multitude of local switches 152.

An engine generator 140 as a first power source is connected to the local power bus 150 via a power control device 110. The local power bus 150 is connected to a first terminal of the power control device. The engine generator 140 comprises a powerplant 142 comprising an internal combustion engine and a generator, an alternator in particular, driven by the engine.

The engine generator 140 also comprises a main generator switch 144 for connecting the engine generator 140 and the alternator in particular to and disconnecting the engine generator 140 from the local power bus 150. The engine generator 140 is connected to a second terminal of the power control device 110.

Power supplied by the engine generator 140 may be controlled by controlling an amount of fuel provided to the internal combustion engine. An amount of fuel provided to the engine is controlled to keep the frequency of the voltage and the current provided is kept at a constant frequency, for example 50Hz, 60Hz or 400Hz.

One or more solar panels 162 as a second power source are connected to the local power bus 150 via one or more inverters 164. The amount of power provided by the solar panel 162 is determined by an amount of sunlight received by the solar panel 162.

In the constellation as described above, local loads connected to the local power bus 150 may be provided with electrical power provided by the engine generator 140 and the solar panel 162. The power consumption of the local loads may vary depending on operation of the local loads. Furthermore, the power provided by the solar panel 162 may vary, depending on weather conditions. Such weather conditions may vary on a minute-by-minute, an hour-by-hour or day-by-day basis.

The variation in the power consumption can usually not be centrally controlled. And if it is possible control the level of power consumption of local loads, it is mostly undesirable to control the power consumption in dependence of electrical power provided by the solar panel 162. If the amount of power provided by the solar panel 162 is lower than the power demanded by the local loads, additional power may be provided by the engine generator 140.

If the solar panel 162 generates more power than required by the local loads, excess power may flow to the engine generator 140, which may result in damage of the engine generator 140. If power is fed to the running engine generator 140, this will lead to instability of the frequency of the power and this will ultimately result in the engine generator 140 being switched off by security circuitry comprised by the engine generator 140. This is not preferred if the local power grid 100 operates isolated from the public power grid 190; in such scenario, the engine generator 140 is to run idle if the solar panel 162 provides sufficient energy to power the local power grid 100.

The power control device 110 is arranged to direct excess power to a load bank 106 as an excess power sink connected to a third terminal of the power control device 110. In this way, provision of excess power to the engine generator 140 that may result in shut-off of the engine generator 140 may be prevented or at least reduced to prevent shut-off or at least reduce the risk thereof. The power control device 110 is provided between the engine generator 140 and the local power bus 150, connecting the engine generator 140 and the local power bus 150 via an electrically conducting line 114.

The electrically conducting line 114 may comprise one or more conductors for transportation of electric power. In a preferred embodiment, the electrically conducting line 114, as well as the local power bus 150, comprises three conductors in parallel. Optionally, a fourth conductor constituting a zero line may be provided. If, in the alternator of the engine generator 140, three phases are generated in a star-configuration, the zero line is preferably connected to the centre of the star.

The power control device 100 comprises a power sensing module 120 as a sensor module. The power sensing module 120 comprises a voltage sensor 122 and a current sensor 124. The current sensor 122 is arranged to measure a current through one or more conductors, preferably over time. The voltage sensor 124 is arranged to determine a voltage between a conductor and a reference potential, preferably over time. The reference potential may be ground level, the zero line discussed above, another reference or a combination thereof.

Based on the sensed current and the sensed voltage, a power transported by the electrically conducting line 114 may be determined by a processing unit 112. Magnitude as well as a direction of the power transported may be determined. Furthermore, for example based on phase difference between current and voltage determined, reactive and real power may be determined.

If an amount of electrical power provided by the solar panel 162 via the inverters 164 to the local power bus 150 is more than required for or demanded by the local loads connected to the local power bus 150, a flow of electrical power builds up towards the engine generator 140. In such case, the electrical power may result in driving the alternator, which then drives the internal combustion engine. Such mode of operation may result in serious damage of the engine generator 140 or in any case in shut-off of the engine generator 140, as discussed above. Therefore, such flow to the engine generator is preferably kept to an amount as small as possible - or is prevented.

When the processing unit 112 determined that electrical energy through the electrically conducting line 114 flows towards the engine generator 140 instead of from the engine generator 140, the processing unit 112 operates an electromotor driver 134 as a power control module to divert the electrical energy from the local power bus to the load bank 106. Instead of the electromotor driver, also another type of electronic power switching device and another type of chopper in particular may be used. Such of electronic power switching device and another type of chopper preferably comprises active switch components provided in a one or three phase bridge configuration. Optionally, a further one or three phase bridge configuration may be provided, constituting an AC-DC-AC converter of which power transfer, frequency and phase may be actively controlled.

Between electromotor driver 134 and the load bank 106, a dv/dt filter 136 is provided as a filter module. The dv/dt filter 136 is arranged to mimic an input impedance of an electromotor. This may include mimicking a particular resistance, a particular impedance - with a real and an imaginary part -, a frequency dependency of that resistance or impedance, including a magnitude and/or phase that may vary dependent on a frequency or frequency spectrum of a signal offered, other, or a combination thereof; the mimicking being such that it resembles the input impedance of an electromotor, which may be a DC electromotor, a synchronous AC electromotor, an asynchronous AC electromotor or another electromotor.

The dv/dt filter 136 enables the electromotor driver 134 to provide power to the load bank 106 as if it were an electromotor. In this way, the processing unit 112 is able to accurately control an amount of power provided to the load bank 106, in response to a flow of power determined to flow through the electrically conducting line 114.

Between the load bank 106 and the electrically conducting line 114 and preferably between the electrically conducting line 114 and the electromotor driver 134, a branch switch 132 is provided for physically connecting the load bank 106 to the local power grid 100 or disconnecting the load bank 106 from the local power grid 100. The branch switch 132 may be controlled by the processing unit 112.

The power control device 110 comprises a power control switch 116 for physically connecting the power control device 110 to the local power grid 100 or disconnecting the power control device 110 from the local power grid 100. The power control switch 116 may be operated manually or by the processing unit 112.

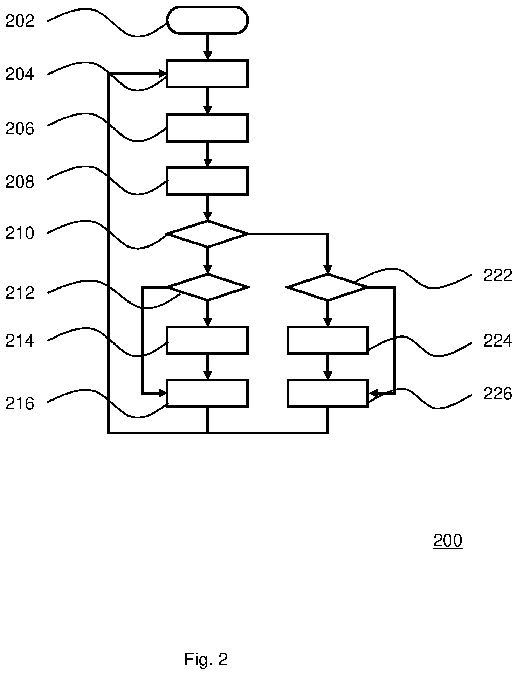

Figure 2 shows a flowchart 200 depicting an example of a mode of operation of the power control device 110. The procedure depicted is preferably executed by the processing unit 112. The various parts of the flowchart are summarised in the list below:
- 202: Start procedure
- 204: Sense voltage
- 206: Sense current
- 208: Determine power flow
- 210: To generator?
- 212: Branch switch open?
- 214: Close branch switch
- 216: Regulate electromotor driver
- 222: Branch switch closed?
- 224: Open branch switch
- 226: Switch off electromotor driver.

The procedure starts in a terminator 202 and continues to step 204 in which a voltage - a potential - of at least one conductor of the electrically conductive line 114 is determined relative to a reference potential. In step 206, executed parallel to, prior to or after step 204, a current through the at least one conductor is determined. If the electrically conductive line 114 comprises multiple conductors, voltages and currents may be determined for each individual conductor.

Based on the sensed values of current and voltage, power flowing through the electrically conductive line 114 is determined in step 208. The power determined may include at least one value of a real power, imaginary power, a magnitude of the total power, a phase difference between current and voltage for one or more conductors, other, or a combination thereof. The value or values determined are preferably signed, i.e. comprise an indicator of a direction of the power flow through the electrically conductive line.

In step 210, the processing unit 112 determines whether the determined power flows from or to the local power bus 150. If power flows from the local power bus 150, the procedure continues to step 212, in which the processing unit 112 checks whether the branch switch 132 is closed or open. If the power control switch 116 is determined to be open, the branch switch 132 is closed in step 214. If the branch switch 132 is determined to be closed, the procedure skips step 214 and continues to step 216. In step 216, power provided to the load bank 106 is regulated.

Generally, the excess power generated by the solar panel 162 is real power, so the load bank 106 is resistive. In case excess reactive power is to be consumed, the load bank 106 may comprise inductive or capacitive components that may be connected to the third terminal of the power control device.

The power provided to the load bank 106 is regulated by operating the electromotor driver 134. Preferably, the power provided by the electromotor driver 134 to the load bank 106 is substantially equal to the power determined in step 208. Optionally, the powerplant 142 of the engine generator may be decoupled from the local power 150, for example by means of the main generator switch 144.

If power flows to the local power bus 150, the procedure continues to step 222, in which the processing unit 112 checks whether the branch switch 132 is closed. If the branch switch 132 is closed, the procedure continues to step 224, in which step the branch switch 132 is opened. If the branch switch 132 is already open, the procedure skips step 224 and continues directly to step 226, in which the electromotor driver 134 is switched off.

In order to prevent excessive switching, in particular of the branch switch 132, the connection between the load bank 106 and the electrically conductive line 114 is maintained until the engine generator 140 supplies more than a pre-determined share of power demanded by local loads, for a pre-determined amount of time.

The engine generator 140 may provide loads connected to the local power bus 150 with power in hybrid mode, together with the public power grid 190 or in stand-alone mode. And the engine generator 140 be fully decoupled from the local power grid 100 - and coupled again.

To couple the engine generator 140 to the local power bus 150 of the local power grid 100, the processing unit 112 obtains data on frequency and phase of current and/or voltage on the local power bus 150 by means of a bus monitor module 104. Subsequently, the engine generator 140 is controlled to provide electrical power at the same frequency and phase. To this end, the engine generator 140 may be connected to the processing unit 112.

The frequency and phase of power provided by the engine generator 140 may be determined by means of the power sensing module 120. Once frequency and phase of the power from the engine generator is matched to the frequency and phase from the public grid, the power control switch 116 is closed. Subsequently, in case desired, the public power grid switch 108 may be opened.

When the local power grid 100 operates in stand-alone modus, powered by the engine generator 140 and/or the solar panel 162, and connection to the public power grid 190 is desired, data on frequency and phase of current and/or voltage on the local power bus 150 as well as data on frequency and phase of current and/or voltage on the public power grid 190 is determined.

Subsequently, the engine generator 140 is operated to match frequency and phase of the local power grid 100 to frequency and phase of the public power grid 190. To this end, the engine generator 140 may be connected to the processing unit 112. Once frequency and phase of the power from the engine generator is matched to the frequency and phase from the public grid, the public power switch 108 is closed. Subsequently, in case desired, the power control switch 116 may be opened.

## Claims

1. Power control device for controlling supply of electrical power to an excess power sink, the device comprising:
a first terminal arranged to be connected to a first power source;
a second terminal arranged to be connected to a load circuit comprising a second power source;
a conductive line provided between the first terminal and the second terminal;
a sensor module arranged to determine a first electrical power flow through the conductive line;
a third terminal arranged to be connected to the excess power sink; and
a power control module connected between the conductive line and the third terminal and arranged to control a second electrical power flow to the third terminal in response to the determined first electrical power flow.

2. Power control device according to claim 1, wherein the second electrical power flow is substantially equal to the first electrical power if the first electrical power flow is oriented from the second terminal to the first terminal.

3. Power control device according to claim 1 or claim 2, wherein the conductive line comprises at least one conductor and the sensor module comprises at least one of a voltage sensor arranged to sense a voltage between the conductor and a reference and a current sensor arranged to sense a current through the conductor.

4. Power control device according to claim 1, wherein the sensor module is arranged to determine at least one of a conductor voltage phase and a conductor voltage frequency of the sensed voltage and a conductor current phase and a conductor current frequency of the sensed current.

5. Power control device according to any of the preceding claims, wherein the first electrical power flow is determined as at least one of real power and reactive power.

6. Power control device according to any of the preceding claims, wherein the power control module comprises an electronic switching unit.

7. Power control device according to claim 6, wherein the electronic switching unit comprises a chopper.

8. Power control device according to claim 7, wherein the chopper is a variable speed electromotor driver.

9. Power control device according to claim 8, further comprising a filter module between the power control module and the third terminal, the filter module having an filter input impedance mimicking an input impedance of an electromotor.

10. Power control device according to claim 9, wherein the filter module has an input frequency response mimicking an input frequency response of the electromotor.

11. Power control device according to any of the preceding claims, wherein a conductor switch is provided arranged to interrupt or close the conducting line and wherein the conductor switch is arranged to be controlled by the power control module.

12. Power control device according to claim 11 to the extend dependent on claim 4, wherein:
the power control module is arranged to receive data from a public power grid on a grid phase and a grid frequency of at least one of a grid current, a grid voltage and a grid power of the public power grid;
the power control module is arranged to control the conductor switch based on the data on the grid frequency and grid phase on one hand and at least one of the conductor voltage phase, the conductor voltage frequency the conductor current phase, the conductor current frequency, a frequency of a power flow through the conductor and a phase of the power flow through the conductor on the other hand.

13. System for providing electrical power to at least one utility load, comprising:
the power control device according to any of the preceding claims;
a local power grid connected to the second terminal of the power control device and comprising at least one utility power outlet arranged to connect the utility load, further comprising a power inlet arranged to be connected to the second power source; and
a switch arranged to establish or interrupt an electrical connection between the local power grid and a public power grid.

14. System according to claim 13, further comprising:
at least one of an engine generator, a fuel cell electrical power source and a supply battery as the first power source;
at least one of a solar panel, a wind turbine generator and a hydropower turbine generator as the second power source; and
at least one of a sink battery, an electrolysis cell and a resistive load as the excess power sink.

15. In a device according to any of the claims 1 to 12, a method of controlling power directed to an excess power sink, the method comprising:
determining a magnitude of a power flow between the load circuit and the first power source;
determining a direction of the power flow;
if the power flow is from the load circuit, controlling the power control module to direct a sink power amount of the power flow to the third terminal, the magnitude of the sink power being substantially equal to the magnitude of the power flow from the load circuit.
